# EUROPEAN PATENT APPLICATION

(11) **EP 4 520 586 A1**
(43) Date of publication of application: **12.03.2025**
(21) Application number: 23815572.5
(22) Date of filing: 05.04.2023
(51) Int. Cl.: B60N 2/427, B60R 21/207

(54) **VEHICLE OCCUPANT PROTECTION DEVICE**

(30) Priority: 31.05.2022 JP 2022088861
(71) Applicant: Autoliv Development AB, 44783 Vargarda (SE)
(72) Inventor: SAITO, Hiroyuki, Yokohama-shi, Kanagawa 222-8580 (JP); MAKIOKA, Takayuki, Yokohama-shi, Kanagawa 222-8580 (JP)
(74) Representative: Feucker, Max Martin
(86) International application number: PCT/JP2023/014027
(87) International publication number: WO 2023/233810

(57) **Abstract**

A vehicle occupant protection device capable of reducing the risk of a submarine phenomenon from occurring during a vehicle collision. A vehicle occupant protection device 30 is provided on a vehicle seat 100 having a seat back 110 and a seat cushion 112 extending forward from a lower part of the seat back 110, and includes expansion bags 31, 32. The expansion bag 31 is configured to be supplied with a working fluid and expand when the risk of a vehicle collision is high, thereby pushing the rearmost part of a seat surface 138 of the seat cushion 112 upward. Similarly, the expansion bag 32 is configured to push a lower part of the seat front surface 128 of the seat back 110 forward.

## Description

### TECHNICAL FIELD

The present invention relates to a vehicle occupant protection device provided in a vehicle seat.

### BACKGROUND ART

In general, a shoulder belt of a seat belt is stretched obliquely in front of a chest of an occupant seated on a vehicle seat, and a lap belt of the seat belt is stretched in front of a waist of the occupant. At the time of a vehicle collision, the seat belt restrains movement of the occupant. However, particularly at the time of a frontal collision of the vehicle, there is a possibility that a submarining phenomenon occurs in which the body of the occupant slips under the lap belt. Submarining is undesirable because, for example, the occupant's legs may become trapped under the instrument panel and be injured, and the lap belt may compress the occupant's abdomen.

An occupant protection device that is provided with an airbag in a vehicle seat is known as a countermeasure for the submarining phenomenon (see, for example, Patent Documents 1 and 2). For example, in Patent Document 1, when a vehicle is in a forward collision, an airbag inside the seat cushion is instantly expanded by an inflator, and raises the front of the seat cushion, thereby restraining the lower back of the occupant and suppressing forward movement of the occupant. In Patent Document 2, the position of the airbag is changed in the vertical direction relative to that of Patent Document 1, and the airbag is arranged below the front part of the support members (seat pan and spring) of the seat cushion.

### RELATED ART DOCUMENTS

### Patent Documents

Patent Document 1: Japanese Unexamined Patent Application Publication H10-217818
Patent Document 2: Japanese Unexamined Patent Application 2006-188198

### SUMMARY OF THE INVENTION

### PROBLEM TO BE SOLVED BY THE INVENTION

Considering various approaches to combat the submarine phenomenon is preferable. For example, the submarine phenomenon occurs when the lap belt slips upward from the pelvis of the occupant during a vehicle collision, so one method of prevention occurrence is to make the lap belt less likely to come off the pelvis during a vehicle collision. However, this point is not considered in Patent Documents 1 and 2.

An object of the present invention is to provide a vehicle occupant protection device that can reduce the risk of the submarine phenomenon from occurring during a vehicle collision.

### MEANS FOR SOLVING THE PROBLEM

A vehicle occupant protection device according to one aspect of the present invention is provided in a vehicle seat having a seat back and a seat cushion extending forward from a lower part of the seat back, and includes an expansion bag configured to be supplied with a working fluid and expand to perform at least one of the following operations (1) and (2) when the risk of a vehicle collision is high.
(1) An operation of pushing the rearmost part of the seat surface of the seat cushion upward.
(2) An operation of pushing the lower part of the seat front surface of the seat back forward.

According to this aspect, when an occupant is seated in the vehicle seat in a normal posture, the angle of the occupant's pelvis can be tilted forward prior to a vehicle collision, thereby the lap belt of the seat belt is less likely to come off the pelvis in the event of a vehicle collision.

Specifically, for example, the operation is as follows. When the risk of a vehicle collision is high, the expansion bag is supplied with working fluid and expands, pushing up the rearmost part of the seat surface of the seat cushion (operation (1) described above). This causes the lower part of the occupant's hip bones (the area toward the sacrum behind the pelvis) to be pushed up, causing the occupant's pelvis to rotate forward. By reducing the pelvis backward tilt angle in this manner, in the event of an actual vehicle collision thereafter, the lap belt portion of the seat belt will be fit securely to the occupant's ilium and will not easily come off the occupant's ilium. Therefore, the risk of the submarine phenomenon occurring is reduced.

The same applies to the operation (2) described above. In other words, when the risk of a vehicle collision is high, the expansion bag is supplied with working fluid and expands, pushing the lower part of the seat front surface of the seat back forward. As a result, the back portion of the lumbar region of the occupant is pushed forward, causing the pelvis of the occupant to rotate so as to tilt forward. Therefore, similar to the case of operation (1) described above, if an actual vehicle collision occurs thereafter, the risk of the submarine phenomenon occurring is reduced.

### BRIEF DESCRIPTION OF THE DRAWINGS

FIG. 1 is a perspective view depicting an external shape of a vehicle seat provided with a vehicle occupant protection device according to an embodiment.
FIG. 2 is a perspective view depicting a frame structure inside the vehicle seat.
FIG. 3 is a side view of a vehicle seat with an occupant seated in a normal position, in which (A) depicts a state in which the vehicle occupant protection device of the embodiment is not provided, (B) depicts a state in which a first expansion bag of the vehicle occupant protection device of the embodiment is provided, and (C) depicts a state in which the first inflatable bag and a second expansion bag of the vehicle occupant protection device of the embodiment are provided.
FIG. 4 is a system configuration diagram of the vehicle occupant protection device according to Embodiment 1.
FIG. 5 is an appearance diagram of a vehicle seat equipped with the vehicle occupant protection device of FIG. 4.
FIG. 6 is a system configuration diagram of the vehicle occupant protection device according to Embodiment 2.
FIG. 7 is an appearance diagram of a vehicle seat equipped with the vehicle occupant protection device of FIG. 6.
FIG. 8 is a side view depicting a vehicle seat equipped with the vehicle occupant protection device of FIG. 6, together with an occupant seated in a normal position.
FIG. 9 is a system configuration diagram of the vehicle occupant protection device according to Embodiment 3.
FIG. 10 is an appearance diagram of a vehicle seat equipped with the vehicle occupant protection device of FIG. 9.
FIG. 11 is a system configuration diagram of the vehicle occupant protection device according to Embodiment 4.
FIG. 12 is an appearance diagram of a vehicle seat equipped with the vehicle occupant protection device of FIG. 11.
FIG. 13 is a system configuration diagram of the vehicle occupant protection device according to Embodiment 5.
FIG. 14 is a cross-sectional view depicting a fluid supply unit of the vehicle occupant protection device of FIG. 13.
FIG. 15 is an appearance diagram of a vehicle seat equipped with the vehicle occupant protection device of FIG. 13.
FIG. 16 is a system configuration diagram of the vehicle occupant protection device according to a modified example of Embodiment 5.

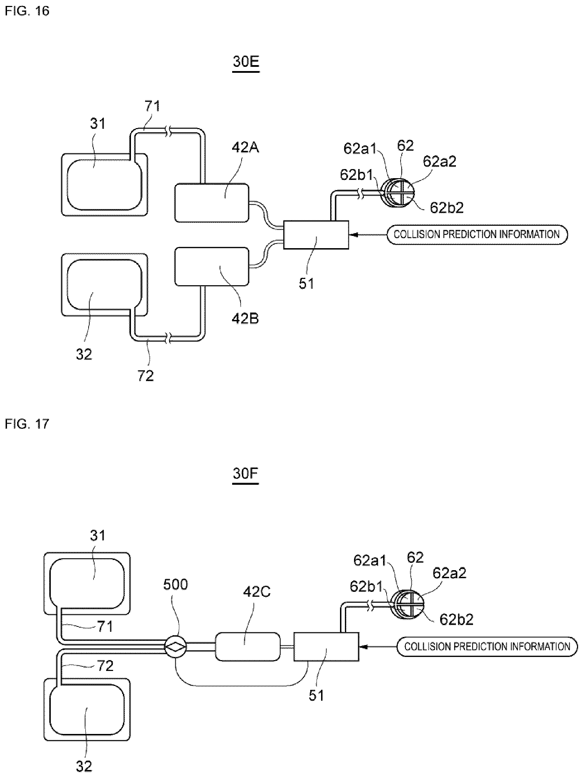

FIG. 16 is a system configuration diagram of the vehicle occupant protection device according to another modified example Embodiment 5.

### DESCRIPTION OF THE PREFERRED EMBODIMENTS

An occupant protection device according to preferred embodiments of the present invention will be described with reference to the accompanying drawings. In the present document, up and down, left and right, and front and rear are defined as follows. When an occupant is seated in a vehicle seat in a normal orientation, the direction in which the occupant faces forward is called the front, and the opposite direction is called the rear, and the coordinate axes are referred to as the front-to-back direction. Furthermore, when the occupant is seated in the vehicle seat in a regular posture, the right of the occupant is referred to as a right direction, the left of the occupant is referred to as a left direction, and a direction indicating a coordinate axis is referred to as the left-right direction. Similarly, when the occupant is seated in a regular posture, a head direction of the occupant is referred to as up, a waist direction of the occupant is referred to as down, and a direction indicating a coordinate axis is referred to as an up-down direction.

### [Vehicle Seat Overview]

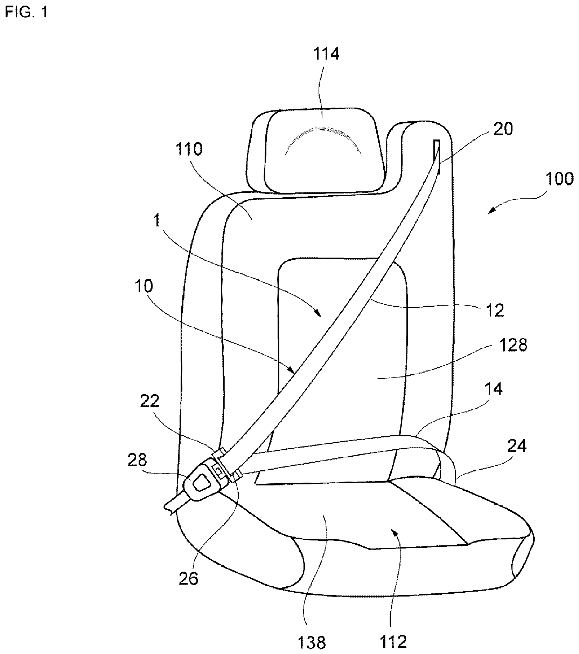

As depicted in FIG. 1, a vehicle seat 100 is provided with a seat belt device 1. The seat belt device 1 has a seat belt 10 which is a webbing for restraining an occupant. The seat belt 10 includes a shoulder belt 12 extending from an upper guide loop or upper anchor 20 to a tongue 22 and a lap belt 14 extending from the tongue 22 to a lap anchor 24. The shoulder belt 12 is stretched diagonally across the front of the chest of an occupant seated in the vehicle seat 100 from an upper part on one of the left and right sides to a lower part on the other left or right side. The lap belt 14 is stretched across the front of the occupant's waist from one side of the occupant to the other side of the occupant. The shoulder belt 12 and the lap belt 14 are formed in a continuous belt shape.

The upper anchor 20 is provided on the upper wall portion of the vehicle interior or on the upper portion of a seat back 110. The tongue 22 has a loop portion 26 through which the seat belt 10 is slidably inserted. When the tongue 22 is engaged with the buckle 28 and fastened, the seat belt 10 is folded back with the loop portion 26 as a folding line, and is separated into the shoulder belt 12 and the lap belt 14. The lap anchor 24 is for securing a second end of the seat belt 10 to a portion of the vehicle structure (for example, a vehicle frame, a seat frame, a seating frame, or the like). Thus, when the tongue 22 is coupled to the buckle 28, the seat belt device 1 defines a three-point restraint between the upper anchor 20, the tongue 22 (buckle 28), and the lap anchor 24.

The vehicle seat 100 includes a seat back 110 that supports the back of the occupant, a seat cushion 112 on which the occupant sits, and a headrest 114 that supports a head of the occupant. The vehicle seat 100 may be a front seat (in other words, a driver's seat or a passenger seat) or a rear seat. The seat cushion 112 extends forward from the lower part of the seat back 110. The lower part of the seat back 110 and a rear end part of the seat cushion 112 are connected to each other. The seat back 110 can be configured to be rotatable (in the front-to-back direction) relative to the seat cushion 112 about this connecting part.

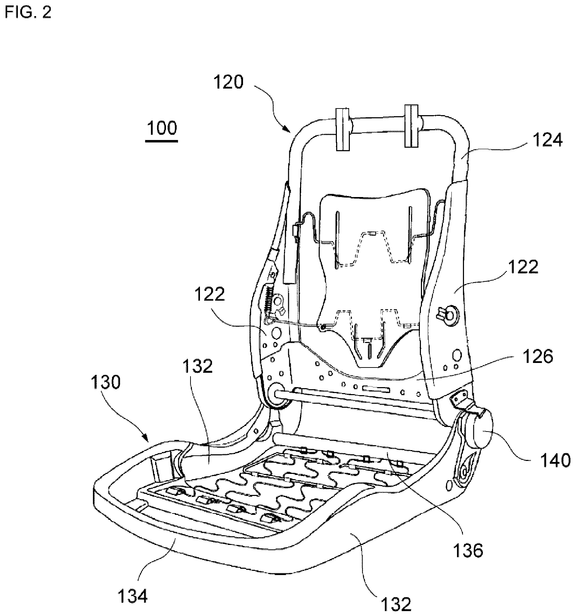

As depicted in FIG. 2, a seat back frame 120 and a seating frame 130 that form the framework of the seat are provided inside the seat back 110 and the seat cushion 112, respectively. The seat back frame 120 and the seating frame 130 are made from metal components or hard resin. The seat back frame 120 and the seating frame 130 are connected via a reclining mechanism 140. The reclining mechanism 140 constitutes the connecting part described above, and enables the front-to-back tilt angle of the seat back 110 relative to the seat cushion 112 to be adjusted.

The seat back frame 120 is configured, for example, by connecting upper end parts and lower end parts of a pair of side frames 122, 122 to an upper frame 124 and a lower frame 126, respectively. The seating frame 130 is configured, for example, by connecting the front end parts and the rear end parts of a pair of side frames 132, 132 to a front frame 134 and to a rear shaft 136, respectively. A seat pan (not depicted) is constructed between the front sides of the side frames 132, 132.

The surfaces and periphery of the seat back frame 120 and the seat frame 130 are covered with a seat pad composed of urethane foam material or the like, and the surface of this seat pad is covered with a seat cover made of leather, fabric, or the like. Therefore, the surface of the seat cover constitutes a seat front surface 128 (backrest surface) of the seat back 110 and a seat surface 138 of the seat cushion 112 (see FIG. 1).

### [Overview of Occupant Protection Devices]

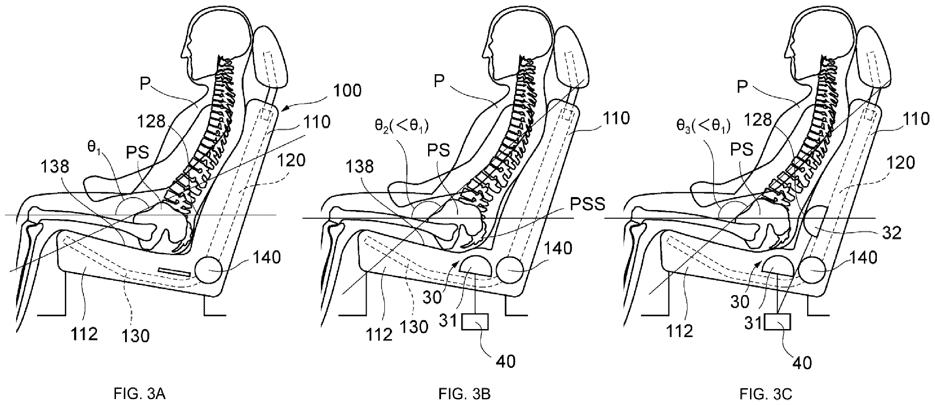

A vehicle occupant protection device 30 (hereinafter simply referred to as "occupant protection device") will be described with reference to FIG. 3. The occupant protection device 30 is provided in the vehicle seat 100. Specifically, the occupant protection device 30 is provided on the seat back 110 and/or the seat cushion 112. The occupant protection device 30 is activated when the risk of a vehicle collision increases, and tilts the pelvis PS of an occupant P forward prior to the vehicle collision. Thus, the lap belt 14 of the seat belt 10 is less likely to come off from the pelvis PS in the event of a vehicle collision, reducing the risk of the submarine phenomenon from occurring.

An increased risk of a vehicle collision can be detected based on sensor information from equipment installed in the vehicle, such as cameras, radar, and LiDAR. For example, when a sensor or camera mounted on the front of the vehicle detects an object in front of the vehicle (examples include, but are not limited to, a vehicle or an obstacle), the vehicle-side ECU receives the detection information and calculates a collision prediction regarding the risk of a vehicle collision, with or without taking into account information such as vehicle speed or vehicle acceleration. This collision prediction information (information indicating an increased risk of a vehicle collision) is transmitted from the vehicle-side ECU to the occupant protection device 30, and the occupant protection device 30 then activates.

The occupant protection device 30 includes expansion bags 31, 32. FIG. 3 (A) depicts a state in which the occupant protection device 30 is not provided, FIG. 3 (B) depicts a state in which the expansion bag 31 is provided in the seat cushion 112, and FIG. 3 (C) depicts a state in which the expansion bag 32 is further installed in the seat back 110. The expansion bag provided in the occupant protection device 30 may be both of the expansion bags 31, 32, or may be only one of them.

The expansion bags 31, 32 expand when the risk of a vehicle collision increases, and apply a force to tilt the angle of the pelvis PS of the occupant P forward. Specifically, the expansion bag performs at least one of the following (1) and (2) by expanding.
(1) An operation of pushing the rearmost part of the seat surface 138 of the seat cushion 112 upward.
(2) An operation of pushing the lower part of the seat front surface 128 of the seat back 110 forward.

By performing at least one of these operations, the pelvis PS of the occupant P rotates so as to tilt forward, and the backward tilt angle θ of the pelvis of the occupant P is reduced. Specifically, as indicated in FIG. 3, the pelvic backward tilt angle θ₂ in (B) is smaller than the pelvic backward tilt angle θ₁ in (A), and the pelvic backward tilt angle θ₃ in (C) is even smaller.

The expansion bag 31 is the first expansion bag and provides for the operation (1) above. The expansion bag 31 is provided inside or below the rear part of the seat cushion 112.

The position of the expansion bag 31 in the front-to-back direction is near the connecting part between the seat back 110 and the seat cushion 112 at the rear part of the seat cushion 112. Therefore, with respect to an occupant P properly seated in the vehicle seat 100, the expansion bag 31 is positioned at the lower rear portion of the pelvis PS of the occupant P. For example, the expansion bag 31 is positioned closer to the seat back 110 than directly below the pelvis PS of the occupant P and below the sacrum PSS of the occupant P. By positioning the expansion bag 31 at the lower rear portion of the pelvis PS, the angle of the pelvis PS can be easily tilted forward.

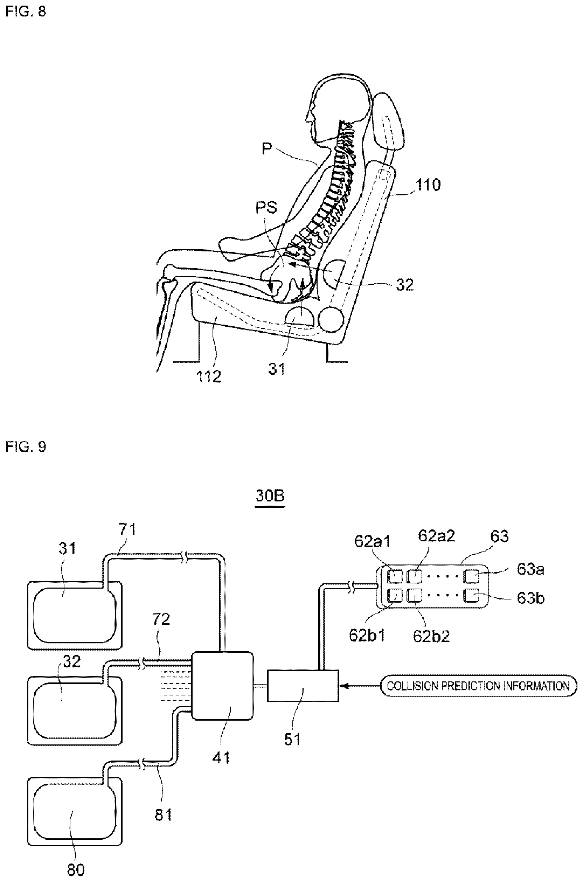

When the expansion bag 31 is expanded, the expansion bag 31 pushes up the rearmost portion of the seat surface 138 (see FIG. 8). As a result, the lower part of the occupant P's hip bones (the sacrum PSS side behind the pelvis PS) is pushed up, causing the pelvis PS to rotate so as to tilt forward. As a result, the pelvis backward inclination angle becomes smaller (θ₂ < θ₁) compared to the case where the occupant protection device 30 is not present. In order to promote rotation of the pelvis PS in a forward tilt direction, the expansion bag 31 may operate to push up the rearmost part of the seat surface 138 diagonally forward.

The expansion bag 31 is provided inside the rear part of the seat cushion 112 below the seat surface 138. For example, as depicted in FIG. 3B, the expansion bag 31 is stowed inside the rear part of the seat cushion 112. In this case, the expansion bag 31 may be covered by a seat pad. By providing the expansion bag 31 inside the seat cushion 112, the rearmost part of the seat surface 138 can be pushed up with a small expansion volume. In addition, the expansion bag 31 may be supported by a part of the seat frame 130 (for example, the side frames 132, 132).

In another embodiment, the expansion bag 31 may be provided below the seat cushion 112. For example, the expansion bag 31 may be provided in the space below the seat cushion 112. In this case, the expansion bag 31 acts to push the entire rearmost portion of the seat cushion 112 from below, thereby pushing the rearmost portion of the seat surface 138 upward. The expansion bag 31 may be supported by a part of the seating frame 130 (for example, the side frames 132, 132), or may be supported by the seating frame 130 or the vehicle frame via a bracket.

An expansion bag 32 is the second expansion bag and provides for the operation (2) above. The expansion bag 32 is provided inside or behind the lower part of the seat back 110.

The position of the expansion bag 32 in the vertical direction is in the vicinity of the connecting part between the seat back 110 and the seat cushion 112 in the lower part of the seat back 110. Therefore, with respect to the occupant P properly seated in the vehicle seat 100, the expansion bag 32 is positioned behind the pelvis PS of the occupant P. Setting in this position facilitates tilting the angle of the pelvis PS forward.

When the expansion bag 32 expands, the expansion bag 32 pushes the lower part of the seat front surface 128 forward (see FIG. 8). As a result, the back portion of the lumbar region of the occupant P is pushed forward, causing the pelvis PS to rotate so as to tilt forward. As a result, the pelvis backward inclination angle becomes smaller compared to the case where the occupant protection device 30 is not present. In order to promote rotation of the pelvis PS so as to tilt forward, the expansion bag 32 may operate to push the lower part of the seat front surface 128 diagonally upward and forward.

The expansion bag 32 is provided inside the lower part of the seat back 110 behind the seat front surface 128. For example, as depicted in FIG. 3C, the expansion bag 32 is stowed inside the lower part of the seat back 110. In this case, the expansion bag 32 may be covered by a seat pad. By providing the expansion bag 32 inside the seat back 110, the seat front surface 128 can be pushed forward with a small expansion volume. The expansion bag 32 may also be supported by a part of the seat back frame 120 (for example, the side frames 122, 122 or the lower frame 126).

In another embodiment, the expansion bag 32 may be provided behind the seat back 110. For example, the expansion bag 32 may be provided in the space behind the seat back 110. In this case, the expansion bag 32 acts to push the entire lower part of the seat back 110 from the rear side, thereby pushing the lower part of the seat front surface 128 forward. The expansion bag 32 may be supported by a part of the seat back frame 120 (for example, the side frames 122, 122 or the lower frame 126), or may be supported by the seat back frame 120 or the vehicle frame via a bracket.

The expansion bags 31, 32 are configured to be expanded by being supplied with a working fluid. Various types of expansion bags 31, 32 can be used as long as they can form an expandable bag body. For example, an airbag can be used. The expansion bags 31, 32 are formed, for example, by sewing or bonding one or more pieces of base fabric or the like at appropriate positions.

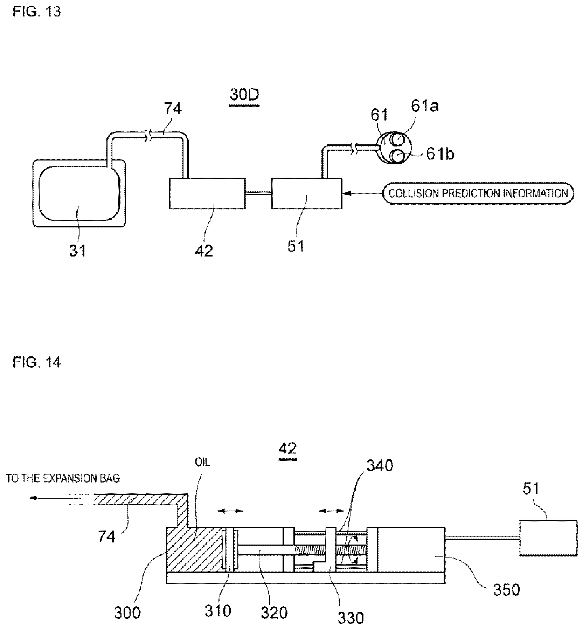

Further, the expansion bags 31, 32 are configured to be able to release the supplied working fluid. Release of the working fluid can be achieved using the weight of the occupant P. For example, the working fluid can be released from the expansion bags 31, 32 by compression of the expansion bags 31, 32 due to the weight of the occupant P seated in the vehicle seat 100. The supply port and the discharge port for the working fluid is the same for the expansion bags 31, 32. However, in another embodiment, the supply and discharge ports for the working fluid for the expansion bags 31, 32 may be formed at separate positions. In addition, the working fluid can be discharged by utilizing a device (for example, a fluid cylinder unit 42, see FIG. 14).

The occupant protection device 30 includes a fluid supply unit 40 configured to be able to supply the working fluid to the expansion bags 31, 32. As the working fluid, in addition to gas, any liquid such as oil can be used. The gas used may be specially designed for the expansion bags 31, 32, but use of atmospheric air is preferable.

The fluid supply unit 40 can be composed of a pumping machine that pumps the working fluid. When the working fluid is air, the air is pumped and supplied to the expansion bags 31, 32 by a pumping machine such as an air pump or an air cylinder. The pumping machine may be, for example, a pump or a cylinder, regardless of the type of working fluid, but is not limited to these.

The fluid supply unit 40 may be provided for each of the expansion bags 31, 32, or may be common to both of the expansion bags 31, 32. In the latter case, the working fluid from a single or common fluid supply unit 40 is distributed through a piping system to supply the expansion bags 31, 32. In addition, a flow regulator such as a flow control valve may be provided in the piping system between the fluid supply unit 40 and the expansion bags 31, 32 to regulate the individual flow rates of the working fluid to the expansion bags 31, 32.

Next, several embodiments of the occupant protection device 30 will be described. Note that in Embodiment 2 and subsequent embodiments, primarily the differences with Embodiment 1 will be described, and the same or similar symbols will be used for configurations that are common or similar to those in Embodiment 1, and descriptions of those configurations will be omitted as appropriate.

### [Embodiment 1]

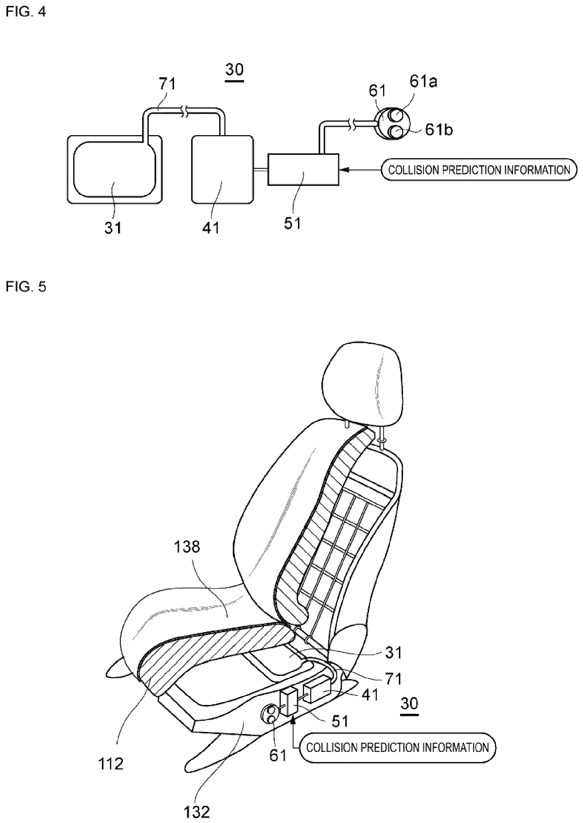

As depicted in FIGS. 4 and 5, the occupant protection device 30 includes an expansion bag 31, an air pump 41, a controller 51 and a control switch 61. The air pump 41 is an example of the fluid supply unit 40. The air pump 41 is connected to the expansion bag 31 via an air tube 71.

The controller 51 electrically controls the air pump 41. The controller 51 is an electronic control unit (ECU) that includes a CPU, a memory, and an input/output interface, and is configured as, for example, a microcomputer. The input/output interface is connected to devices constituting the occupant protection device 30, such as the air pump 41 and the control switch 61. The input/output interface is also connected to a vehicle-side ECU, and receives information relating to collision prediction. Collision prediction relates to the risk of a vehicle collision and is calculated by the vehicle's ECU based on sensor information such as cameras, radar, and LiDAR mounted on the vehicle. With this configuration, the controller 51 receives an input signal from the control switch 61 and information from the vehicle ECU indicating an increased risk of a vehicle collision. In response to these input signals and information, the controller 51 sends instruction signals to various devices such as the air pump 41 to control expansion of the expansion bag 31.

The control switch 61 functions as an operating part for manually switching between supplying air to the expansion bag 31 and releasing air from the expansion bag 31. The control switch 61 has, for example, a supply button 61a and a release button 61b that are manually input by the occupant. The controller 51 controls the air pump 41 based on a manual input to a control switch 61.

The control switch 61 is provided in a position enabling manual operation by the occupant P seated in the vehicle seat 100. For example, the control switch 61 is provided on the outside of the seat cushion 112 on the right or left side. In contrast, the air pump 41 and the controller 51 are provided inside the seat cushion 112. For example, the air pump 41 and the controller 51 are attached to the inner or outer surface of the side frame 132.

In normal operation, the occupant P can use the control switch 61 to supply air to or release air from the expansion bag 31. For example, when the occupant P presses the supply button 61a, an input signal to that effect is sent to the controller 51, and the controller 51 sends a working fluid supply signal to the air pump 41. Thus, the air pump 41 is operated, and air is supplied to the expansion bag 31 via the air tube 71, causing the expansion bag 31 to expand. When the inflation bag 31 is fully expanded, supply of air is stopped. An open/close valve (not depicted) may be provided in the air tube 71 and this valve may be closed.

In addition, when the occupant P presses the release button 61b, an input signal to that effect is sent to the controller 51, and the controller 51 sends a stop signal to the air pump 41. Here, stopping of the air pump 41 allows air to be released from the expansion bag 31. If an open/close valve (not depicted) is provided in the air tube 71, the open/close valve is opened when the air pump 41 is stopped. As a result, the weight of the occupant P seated in the vehicle seat 100 compresses the expansion bag 31, causing air to be released from the expansion bag 31 to the air tube 71. In this manner, under normal circumstances, the occupant P can use the control switch 61 to adjust the expansion bag 31 to a desired degree of expansion.

When the risk of a vehicle collision increases, the controller 51 receives information indicating the increased risk of a vehicle collision from the vehicle-side ECU. Based on this information received, the controller 51 sends a working fluid supply signal to the air pump 41 to operate the air pump 41. The expansion bag 31 is expanded to the maximum capacity thereof by air from the air pump 41. As described above, the expansion bag 31 thus expanded pushes up the rearmost part of the seat surface 138, causing the angle of the pelvis PS of the occupant P to tilt forward. As a result, the posture of the occupant P is adjusted in a direction such that the submarine phenomenon is less likely to occur. As described above, if a vehicle collision actually occurs thereafter, the lap belt 14 is less likely to come off from the pelvis PS, reducing the risk of the submarine phenomenon occurring.

When a vehicle collision does not actually occur and the risk of a vehicle collision is reduced, the controller 51 receives information indicating that the risk of a vehicle collision has been reduced from the vehicle-side ECU. Based on this information received, the controller 51 may send a stop signal to the air pump 41 to stop the air pump 41 and allow air to be released from the expansion bag 31.

As described above, according to this embodiment, when the risk of a vehicle collision increases, the expansion bag 31 is automatically inflated during the pre-crash period (the time when the risk of a collision is predicted before the collision begins), thereby tilting the angle of the pelvis PS of the occupant P forward, and reducing the risk of the submarine phenomenon from occurring in the event of a subsequent actual vehicle collision.

In addition, since the angle of the pelvis PS is tilted forward, the posterior curvature of the lumbar spine of the occupant P is reduced, thereby reducing the moment load acting on the lumbar spine during an actual vehicle collision. This reduces the risk of lumbar spine injury in a collision. Furthermore, manual adjustment to a desired degree of expansion during normal operation enables the expansion bag 31 to also serve to keep the occupant in a comfortable position.

### [Embodiment 2]

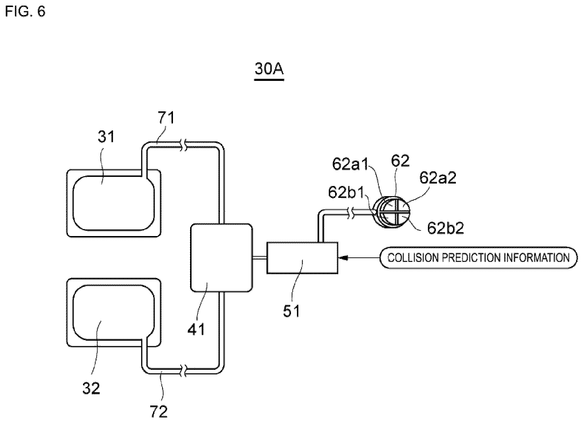

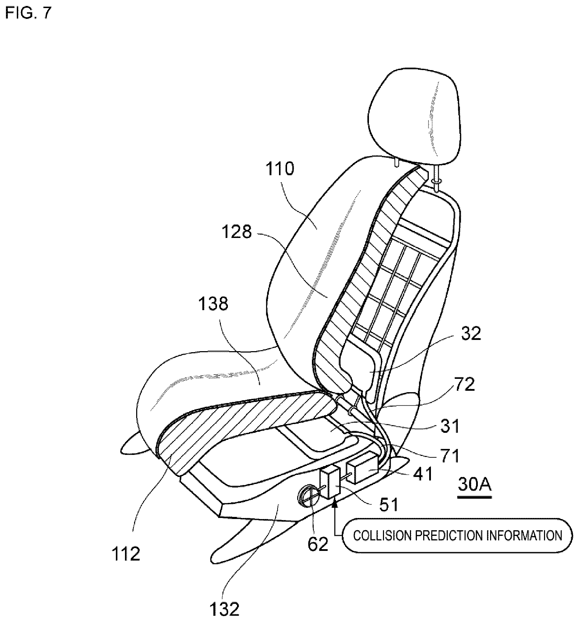

FIGS. 6 to 8 depict an occupant protection device 30A according to Embodiment 2. An occupant protection device 30A is configured by adding an expansion bag 32 to the passenger protection device 30 according to Embodiment 1. The expansion bag 32 can function as a lumbar support bag for the occupant P under normal circumstances. The air pump 41 is common to the expansion bags 31, 32, and is connected to the expansion bags 31, 32 via air tubes 71, 72 (a first tube and a second tube), respectively. Air from the air pump 41 is distributed and supplied to the expansion bags 31, 32, causing the expansion bags 31, 32 to expand. A control switch 62 is configured to be able to individually switch between supplying and releasing air to the expansion bags 31, 32, and has, for example, a supply button 62a1 and a release button 62b1 for expansion bag 31, and a supply button 62a2 and a release button 62b2 for expansion bag 32.

According to the present Embodiment, when the risk of a vehicle collision increases, not only expansion bag 31 but also expansion bag 32 tilts the angle of the pelvis PS of the occupant P forward. Therefore, a higher effect than that of Embodiment 1 can be expected.

### [Embodiment 3]

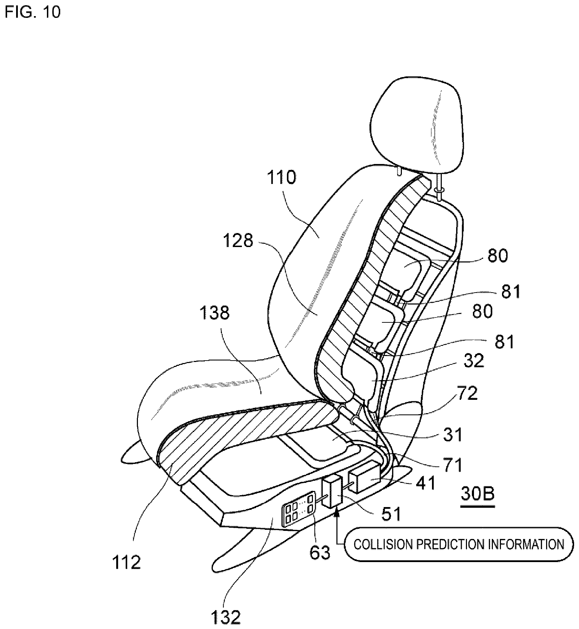

FIGS. 9 and 10 depict an occupant protection device 30B according to Embodiment 3. An occupant protection device 30B is configured by adding one or more cushion parts 80 to the passenger protection device 30A according to Embodiment 2. One or more cushion portions 80 are provided on the seat back 110 and/or the seat cushion 112 at positions different from the positions at which the expansion bags 31, 32 are installed. Here, two cushion parts 80 are provided on the seat back 110.

The cushion part 80, similar to the expansion bags 31, 32, is configured to be able to receive air from the air pump 41 and to release the supplied air. The air pump 41 is common to the expansion bags 31, 32 and the cushion part 80, and is connected to the expansion bags 31, 32 and the cushion part 80 via air tubes 71, 72, and 81, respectively. Air from the air pump 41 is distributed and supplied to the expansion bags 31, 32 and the cushion part 80, causing the expansion bags 31, 32 and the cushion part 80 to expand.

The control switch 63 is configured to be able to manually switch between supplying and releasing air to the expansion bags 31, 32 and the cushion part 80, respectively. For example, a control switch 63 has supply buttons 62a1, 62a2 and release buttons 62b1, 62b2 dedicated to the expansion bags 31, 32, respectively, as well as supply button 63a and release button 63b dedicated to the cushion part 80.

According to the present Embodiment, the air pump 41 can be effectively used to expand the cushion part 80, thereby supporting the occupant P. Also, as with Embodiment 2, when the risk of a vehicle collision increases, the expansion bags 31, 32 can be expanded to tilt the angle of the pelvis PS of the occupant P forward, but in this case, not distributing air to the cushion part 80 is also feasible. For example, an open/close valve (not depicted) may be provided in a pipeline (for example, air tube 81) associated with the cushion part 80, and the controller 51 may close this open/close valve.

### [Embodiment 4]

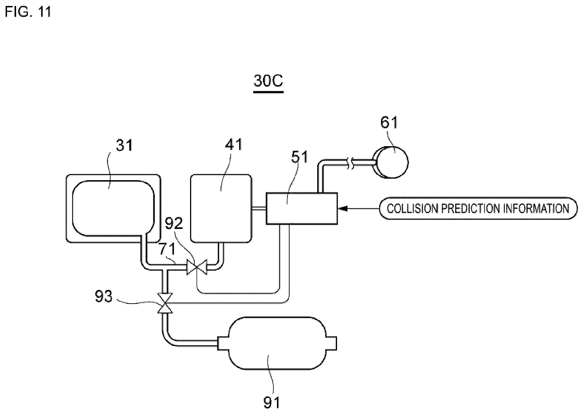

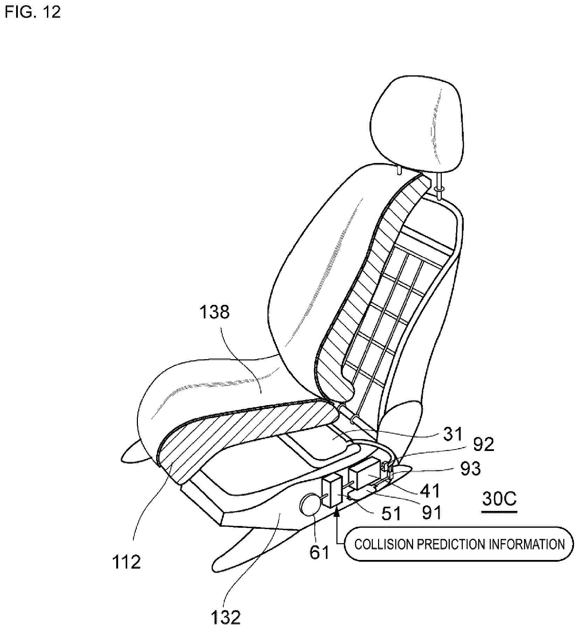

FIGS. 11 and 12 depict an occupant protection device 30C according to Embodiment 4. The occupant protection device 30C has an accumulator 91 and open/close valves 92, 93 added to the occupant protection device 30 according to Embodiment 1. The accumulator 91 and the open/close valves 92, 93 may be provided inside the seat cushion 112, similar to the air pump 41 and the controller 51.

The open/close valves 92, 93 are electrically connected to the controller 51 and the opening and closing operations thereof are controlled by the controller 51. The open/close valves 92, 93 are constituted by, for example, electromagnetic valves. The open/close valves 92, 93 are provided in the piping system between the expansion bag 31 and the air pump 41.

The accumulator 91 (pressure accumulator) is configured to be capable of accumulating air and supplying the accumulated air to the expansion bag 31. The accumulator 91 is provided in the piping system between the expansion bag 31 and the air pump 41. The accumulator 91 receives air supplied from the air pump 41 and retains the supplied air at a constant pressure. For example, during normal use (when a collision is not predicted), the accumulator 91 retains the air supplied by the air pump 41 at a constant pressure. Air is normally supplied to the expansion bag 31 from the air pump 41 with the open/close valve 92 open. In other words, under normal circumstances, the open/close valve 93 is closed and air from the accumulator 91 is not supplied to the inflation bag 31.

The accumulator 91 is configured to provide stored air to the expansion bag 31 when the risk of a vehicle collision is high. Specifically, the controller 51 opens the open/close valve 93 when the risk of a vehicle collision is high. This allows the supplying of accumulated air from the accumulator 91 to the expansion bag 31. The air from the accumulator 91 is merged with the air from the air pump 41 and supplied to the expansion bag 31.

According to the present Embodiment, the expansion speed of the expansion bag 31 can be increased when the risk of a vehicle collision is high. From another perspective, even if the output of the air pump 41 is small, the expansion bag 31 can be sufficiently expanded when the risk of a vehicle collision is high.

### [Embodiment 5]

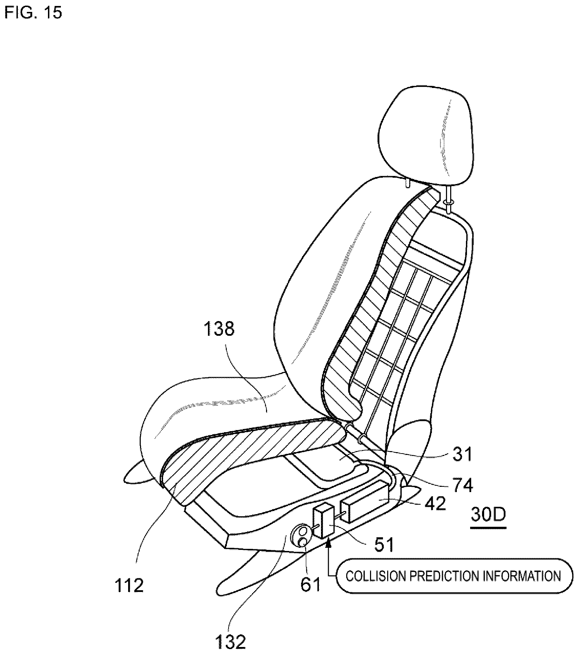

FIGS. 13 to 15 depict an occupant protection device 30D according to Embodiment 5. The occupant protection device 30D is suitable for use when the working fluid is a liquid such as oil. The occupant protection device 30D is basically the same as the occupant protection device 30 according to Embodiment 1, but includes the fluid cylinder unit 42 instead of the air pump 41. The fluid cylinder unit 42 is an example of the fluid supply unit 40.

The fluid cylinder unit 42 includes, for example, a cylinder 300, a piston 310, a shaft 320, a linear slider 330, a slider guide 340, and a motor 350. The motor 350 is electrically connected to the controller 51 and is configured as a DC motor controlled by, for example, PWM control. When the motor 350 is driven, the linear slider 330 performs translational motion while being guided by the slider guide 340. Furthermore, this causes the piston 310, which is connected to the linear slider 330 via the shaft 320, to move. The piston 310 reciprocates as the motor 350 rotates forward and backward. In other words, as the piston 310 moves forward, the oil in the cylinder 300 is supplied to the expansion bag 31 via a liquid tube 74. Furthermore, as the piston 310 moves back, the supplied oil is released from the expansion bag 31 and flows into the cylinder 300 via the liquid tube 74.

The fluid cylinder unit 42 functions in the same manner as the air pump 41. For example, when the risk of a vehicle collision is high, the controller 51 sends a working fluid supply signal to the motor 350 of the fluid cylinder unit 42 to drive the motor 350 of the fluid cylinder unit 42. The expansion bag 31 expanded by the oil from the fluid cylinder unit 42 pushes the rearmost portion of the seat surface 138 upward in the same manner as described above, causing the angle of the pelvis PS of the occupant P to tilt forward.

Therefore, in the present Embodiment as well, the same effects as in Embodiment 1 can be achieved.

In addition, when no actual vehicle collision occurs and the risk of a vehicle collision has decreased, the controller 51 may, as in Embodiment 1, send a stop signal or a fluid release signal to the motor 350 of the fluid cylinder unit 42 to stop or reverse the rotation of the motor 350 of the fluid cylinder unit 42, and allow oil to be released from the expansion bag 31.

The embodiments described above are for ease of understanding of the present invention and are not intended to be construed as limiting the present invention. Elements included in the embodiments, as well as arrangements, materials, conditions, shapes, sizes, and the like thereof, are not limited to those exemplified, but rather can be appropriately changed. In addition, the embodiments may be combined or applied together.

For example, just as the expansion bag 32 is added to Embodiment 1 to form Embodiment 2, the expansion bag 32 may be added to the occupant protection device 30D according to Embodiment 5. In this case, as depicted in FIG. 16, an occupant protection device 30E may have two fluid cylinder units 42A, 42B corresponding to the two expansion bags 31, 32.

Alternatively, as depicted in FIG. 17, an occupant protection device 30F may have one fluid cylinder unit 42C common to the two expansion bags 31, 32. In this case, a flow regulator 500 may be provided downstream of the fluid cylinder unit 42C. The flow regulator 500 can be composed of a flow regulator valve (for example, an electric valve) controlled by the controller 51. The flow rate regulator 500 is configured to be able to adjust the flow rate of oil from the fluid cylinder unit 42C to the expansion bag 31 and the flow rate of oil from the fluid cylinder unit 42C to the expansion bag 32.

In another embodiment of the present invention, a device (for example, an inflator, a micro gas generator, or the like) for expanding the expansion bag of the occupant protection devices 30A to 30F by a different method may be additionally provided. Such a configuration would be useful, for example, if there is some problem (for example, a malfunction) with the camera or sensor used to detect the risk of a vehicle collision, such that identifying conditions that increase the risk of a vehicle collision is not feasible. It is also useful when a condition that increases the risk of a vehicle collision is identified, but the collision is unexpected (for example, a collision to the side of the vehicle rather than to the front of the vehicle) and the time from identification to activation is too short to activate in time (for example, when the expansion bag cannot be expanded in time by the fluid supply unit 40).

In consideration of such a case, the occupant protection devices 30A to 30F may activate the additional device (for example, inflator, micro gas generator, and the like) in response to a collision signal indicating that a collision has actually occurred. Specifically, when a collision actually occurs, the vehicle-side ECU may send a collision signal to other airbags that may generally be installed in the vehicle (for example, front airbags, curtain airbags, knee airbags, side airbags, and the like), and may also send a collision signal to additional equipment for expanding bags in occupant protection devices 30A to 30F, causing the expansion bags to expand in the same manner as other airbags that are activated. In other words, the basic operation mode of the occupant protection devices 30A to 30F is reversible, but when an actual collision occurs, the operation mode becomes irreversible (for example, gas generation by an inflator, micro gas generator, and the like) and may be activated in conjunction with the operation of other airbags, or the like.

### [Embodiment]

The present technology is described, for example, according to various embodiments below. Various examples of embodiments of the present technology are described for convenience as numbered examples (1, 2, 3, and the like). These are provided as examples and not as limitations of the present technology. It should be noted that any of the dependent examples may be combined in any suitable manner and may be incorporated within their respective independent examples.

### Example 1.

A vehicle occupant protection device provided in a vehicle seat having a seat back and a seat cushion extending forward from a lower part of the seat back, comprising:
an expansion bag that through supplying of a working fluid when risk of a vehicle collision is high is configured to perform at least one of:
(1) an operation of pushing up on a rearmost part of a seat surface of the seat cushion; and
(2) an operation of pushing a lower part of a seat front surface of the seatback.

### Example 2.

The vehicle occupant protection device according to Example 1, wherein the expansion bag includes a first expansion bag for operation (1) and the first expansion bag is provided in or below a rear part of the seat cushion.

### Example 3.

The vehicle occupant protection device according to Example 1 or 2, wherein the expansion bag includes a first expansion bag for operation (1) and the first expansion bag is provided in a rear part of the seat cushion so as to be positioned below rear portion of a pelvis of the occupant when the occupant is seated properly in the vehicle seat.

### Example 4.

The vehicle occupant protection device according to any one of Examples 1 to 3, wherein the expansion bag includes a second expansion bag for operation (2) and the second expansion bag is provided at a rear part inside a lower part of the seatback.

### Example 5.

The vehicle occupant protection device according to any one of Examples 1 to 4, wherein the expansion bag includes a second expansion bag for operation (2) and the second expansion bag is provided at a lower part of the seatback so as to be positioned at a back surface portion of a pelvis of the occupant when the occupant is properly seated in the vehicle seat.

### Example 6.

The vehicle occupant protection device according to any one of Examples 1 to 5, further comprising:
a fluid supply unit configured to enable supplying the working fluid to the expansion bag; and
a controller that electrically controls the fluid supply unit, wherein the controller sends a working fluid supply signal to the fluid supply unit when risk of a vehicle collision is high, and
working fluid is supplied from the fluid supply unit to the expansion bag.

### Example 7.

The vehicle occupant protection device according to Example 6, wherein the controller receives information indicating that risk of vehicle collision is high and sends a working fluid supply signal to the fluid supply unit based on this information received.

### Example 8.

The vehicle occupant protection device according to Example 6 or 7, wherein the expansion bag is configured to enable release of the supplied working fluid and when risk of vehicle collision decreases the controller stops the fluid supply unit and permits release of the working fluid from the expansion bag.

### Example 9.

The vehicle occupant protection device according to any one of Examples 6 to 8, wherein
the expansion bag is configured to enable release of supplied working fluid, the occupant protection device further includes an operating part for manually switching between supply of working fluid to the expansion bag and release of working fluid from the expansion bag, and
the controller controls the fluid supply unit based on the manual input to the operating part.

### Example 10.

The vehicle occupant protection device according to Example 9, further comprising one or more cushion parts at a position different from the installation position of the expansion bag configured to enable supply of working fluid from the fluid supply unit and also configured to enable release of the supplied working fluid.

### Example 11.

The vehicle occupant protection device according to Examples 6 to 10, further comprising:
an accumulator configured to enable accumulation of working fluid and to enable supply of accumulated working fluid to the expansion bag, wherein
the accumulator is configured to supply accumulated working fluid to the expansion bag when risk of vehicle collision is high.

### Example 12.

The vehicle occupant protection device according to Example 11, further comprising:
a open/close valve between the expansion bag and the accumulator, wherein the controller opens the open/close valve when the risk of vehicle collision is high, permitting working fluid accumulated in the accumulator to be supplied to the expansion bag.

### Example 13.

The vehicle occupant protection device according to any one of Examples 1 to 5, wherein the expansion bag includes a first expansion bag for operation (1) and a second expansion bag for operation (2).

### Example 14.

The vehicle occupant protection device according to Example 13, further comprising a fluid supply unit configured to enable supplying of working fluid, wherein the fluid supply unit is common to the first expansion bag and the second expansion bag and is connected to the first expansion bag and the second expansion bag respectively via a first tube and a second tube.

### Example 15.

The vehicle occupant protection device according to Example 13 or 14, further comprising a flow regulator configured to adjust flow of working fluid to the first expansion bag and flow of working fluid to the second expansion bag.

### EXPLANATION OF CODES

1. Seatbelt device, 10. Seatbelt, 12. Shoulder belt, 14. Lap belt, 20. Upper anchor, 22. Tongue, 24. Lap anchor, 26. Loop part, 28. Buckle, 30, 30A to 30F. Occupant protection device, 31, 32. Expansion bag (first expansion bag, second expansion bag), 40. Fluid supply unit, 41. Air pump, 42, 42A to 42C. Cylinder unit, 51. Controller, 61, 62, 63. Control switch (operating part), 61a, 62a1, 62a2, 63a. Supply button, 61b, 62b1, 62b2, 63b. Release button, 71, 72. Air tubes (first tube, second tube), 74. Liquid tube, 80. Cushion, 81. Air tube, 91. Accumulator, 92, 93. Open/close valve, 100. Vehicle seat, 110. Seatback, 112. Seat cushion, 114. Headrest, 120. Seatback frame, 122. Side frame, 124. Upper frame, 126. Lower frame, 128. Seat front surface, 130. Seating frame, 132. Side frame, 134. Front frame, 136. Rear shaft, 138. Seat surface, 140. Reclining mechanism, 300. Cylinder, 310. Piston, 320. Shaft, 330. Linear slider, 340. Slider guide, 350. Motor, 500. Flow regulator, P. Occupant, PS. Pelvis, PSS. Sacrum.

## Claims

1. A vehicle occupant protection device provided in a vehicle seat having a seat back and a seat cushion extending forward from a lower part of the seat back, comprising:
an expansion bag configured to expand by being supplied a working fluid when risk of a vehicle collision is high, in order to perform at least one of:
(1) an operation of pushing up on a rearmost part of a seat surface of the seat cushion; and
(2) an operation of pushing a lower part of a seat front surface of the seatback.

2. The vehicle occupant protection device according to claim 1, wherein the expansion bag includes a first expansion bag for operation (1) and the first expansion bag is provided in or below a rear part of the seat cushion.

3. The vehicle occupant protection device according to claim 1, wherein the expansion bag includes a first expansion bag for operation (1) and the first expansion bag is provided in a rear part of the seat cushion so as to be positioned below rear portion of a pelvis of the occupant when the occupant is seated properly in the vehicle seat.

4. The vehicle occupant protection device according to claim 1, wherein the expansion bag includes a second expansion bag for operation (2) and the second expansion bag is provided at a rear part inside a lower part of the seatback.

5. The vehicle occupant protection device according to claim 1, wherein the expansion bag includes a second expansion bag for operation (2) and the second expansion bag is provided at a lower part of the seatback so as to be positioned at a back surface portion of a pelvis of the occupant when the occupant is properly seated in the vehicle seat.

6. The vehicle occupant protection device according to any one of claims 1 to 5, further comprising:
a fluid supply unit configured to enable supplying the working fluid to the expansion bag; and
a controller that electrically controls the fluid supply unit, wherein
the controller sends a working fluid supply signal to the fluid supply unit when risk of a vehicle collision is high, and
working fluid is supplied from the fluid supply unit to the expansion bag.

7. The vehicle occupant protection device according to claim 6, wherein the controller receives information indicating that risk of vehicle collision is high and sends a working fluid supply signal to the fluid supply unit based on the information received.

8. The vehicle occupant protection device according to claim 6, wherein when risk of vehicle collision decreases, the controller stops the fluid supply unit and permits release of the working fluid from the expansion bag.

9. The vehicle occupant protection device according to claim 6, wherein
the expansion bag is configured to enable release of the supplied working fluid,
the occupant protection device further includes an operating part for manually switching between supply of working fluid to the expansion bag and release of working fluid from the expansion bag, and
the controller controls the fluid supply unit based on the manual input to the operating part.

10. The vehicle occupant protection device according to claim 9, further comprising one or more cushion parts at a position different from the installation position of the expansion bag configured to enable supply of working fluid from the fluid supply unit and also configured to enable release of the supplied working fluid.

11. The vehicle occupant protection device according to claim 6, further comprising:
an accumulator configured to enable accumulation of working fluid and to enable supply of accumulated working fluid to the expansion bag, wherein
the accumulator is configured to supply accumulated working fluid to the expansion bag when risk of vehicle collision is high.

12. The vehicle occupant protection device according to claim 11, further comprising:
an open/close valve between the expansion bag and the accumulator, wherein
the controller opens the open/close valve when the risk of vehicle collision is high, permitting working fluid accumulated in the accumulator to be supplied to the expansion bag.

13. The vehicle occupant protection device according to any one of claims 1 to 5, wherein the expansion bag includes a first expansion bag for operation (1) and a second expansion bag for operation (2).

14. The vehicle occupant protection device according to claim 13, further comprising a fluid supply unit configured to enable supplying working fluid, wherein the fluid supply unit is common to the first expansion bag and the second expansion bag and is connected to the first expansion bag and the second expansion bag, via a first tube and a second tube, respectively.

15. The vehicle occupant protection device according to claim 14, further comprising a flow regulator configured to adjust flow of working fluid to the first expansion bag and flow of working fluid to the second expansion bag.
